# EUROPEAN PATENT SPECIFICATION

(11) **EP 2 177 550 B1**
(45) Date of publication and mention of the grant of the patent: **05.11.2014**
(21) Application number: 08791220.0
(22) Date of filing: 16.07.2008
(51) Int. Cl.: C08F 220/22, C08F 216/12, C08F 290/06, D06M 15/277

(54) **FLUORINE-CONTAINING FIBER PROCESSING AGENT HAVING ALCOHOL REPELLENCY AND SOIL RELEASE PROPERTIES**
FLUORHALTIGES ALKOHOL- UND SCHMUTZABWEISENDES FASERVERARBEITUNGSMITTEL
AGENT DE TRAITEMENT DE FIBRES CONTENANT DU FLUOR PRÉSENTANT DES PROPRIÉTÉS DE RÉSISTANCE À L'ALCOOL ET DE LIBÉRATION DES SALISSURES

(30) Priority: 20.07.2007 JP 2007189437
(43) Date of publication of application: 21.04.2010
(73) Proprietor: Daikin Industries, Ltd., Osaka 530-8323 (JP)
(72) Inventor: KUBOTA, Kouji, Settsu-shi Osaka 566-8585 (JP); NANRI, Masashi, Settsu-shi Osaka 566-8585 (JP); SAKASHITA, Hirotoshi, Settsu-shi Osaka 566-8585 (JP); ENOMOTO, Takashi, Settsu-shi Osaka 566-8585 (JP)
(74) Representative: Hoffmann Eitle
(86) International application number: PCT/JP2008/062825
(87) International publication number: WO 2009/014039

(56) References cited:
- WO-A1-03/054284
- WO-A1-2005/092997
- WO-A1-2007/007743
- WO-A1-2008/093567
- JP-A- 11 049 825
- US-A1- 2009 256 102

## Description

### FIELD OF THE INVENTION

The present invention relates to a fluorine-containing copolymer and a fluorine-containing textile processing agent, which imparts excellent alcohol repellency, oil repellency, stain-proofing properties and soil releasability to a treated article such as a textile, and is also excellent in washing durability of alcohol repellency, oil repellency, stain-proofing properties and soil releasability.

### BACKGROUND OF THE INVENTION

As a stain-proofing agent which imparts water- and oil-repellency to fiber woven fabrics and the like, and also enables easy removal of stains adhered on fibers through washing, a copolymer of a (meth)acrylate ester having a fluoroalkyl group (hereinafter also referred to as a fluorine-containing compound) and a hydrophilic group-containing compound is known (cf. JP-A-49-75472, JP-A-53-134786, JP-A-53-134787, JP-A-59-204980, JP-A-06-116340 and

JP-A-11-4985).

However, fiber woven fabrics and the like treated with these fluorine-containing copolymers do not always have satisfactory washing durability and also have a tendency of failing to have sufficient and satisfactory soil releasability from heavy soils (for example, a waste oil such as a used engine oil).

It is considered that oil repellency and flip-flop properties are important so as to obtain sufficient soil releasability and, in air, perfluoroalkyl groups (hereinafter abbreviated to Rf groups) are oriented on the surface so that high oil repellency is exhibited. In contrast, in water, Rf groups retract and hydrophilic groups are oriented on the surface, and thus soils are easily removed. The flip-flop properties are properties that a surface molecular structure varies depending on the environment in air and water, and the flip-flop properties are proposed by Sherman et al. [P. Sherman, S. Smith, B. Johannessen, Textile Research Journal, 39, 499 (1969)].

When the Rf group has a short chain length, the oil repellency tends to deteriorate as crystallinity of Rf decreases and an article to be treated is easily contaminated with oil soils. Therefore, a stain-proofing agent having the Rf group substantially containing at least 8 carbon atoms has been used (cf. JP-A-53-134786). The alcohol repellency also tends to deteriorate when the Rf group has carbon atoms less than 8, as similar to the above-mentioned oil repellency.

Recently, as to compounds containing Rf group having 8 carbon atoms which are prepared by telomerization, the Federal Register (FR Vol. 68, No. 73/April 16, 2003 [FRL-2303-8]) (http://www.epa.gov/opptintr/pfoa/pfoafr.pdf), EPA Environmental News for release Monday April, 2003, "EPA INTENSIFIES SCIENTIFIC INVESTIGATION OF A CHEMICAL PROCESSING AID" (http://www.epa.gov/opptintr/pfoa/pfoaprs.pdf), and EPA OPPT FACT SHEET April 14, 2003 (http://www.epa.gov/opptintr/pfoa/pfoafacts.pdf) announced that a "telomer" may possibly metabolize or decompose to perfluorooctanoic acid (hereinafter abbreviated to PFOA). EPA (Environmental Protection Agency of USA) announced that the EPA intensifies the scientific investigation on PFOA (cf. EPA Report "PRELIMINARY RISK ASSESSMENT OF THE DEVELOPMENTAL TOXICITY ASSOCIATED WITH EXPOSURE TO PERFLUOROOCTANOIC ACID AND ITS SALTS" (http://www.epa.gov/opptintr/pfoa/pfoara.pdf)).

[Patent Document 1] JP-A-49-75472
[Patent Document 2] JP-A-53-134786
[Patent Document 3] JP-A-53-134787
[Patent Document 4] JP-A-59-204980
[Patent Document 5] JP-A-53-134786
[Patent Document 6] JP-A-06-116340
[Patent Document 7] JP-A-11-49825

### DISCLOSURE OF THE INVENTION

### Problems to be Solved by the Invention

An object of the present invention is to provide a fluorine-containing textile processing agent which, while maintaining washing durability, imparts excellent alcohol repellency, oil repellency, stain-proofing properties and soil releasability to a substrate such as a fiber and a woven fabric, in particular to a natural fiber such as a cotton fiber or a mixture fiber and also to provide a fluorine-containing textile processing agent having soil releasability excellent similar to the prior art even if the number of carbon atoms of an Rf group is decreased to less than 8, which is less than that in the prior art.

### Means for Solving the Problems

The present invention provides a fluorine-containing copolymer comprising repeating units derived from
(a) a monomer having a fluoroalkyl group or a fluoroalkenyl group,
(b) a monomer having an alkylene oxide group,
(c) a monomer having an acetoacetyl group,
(d) a monomer having -CH(OH)-CH₂-Cl group, and
(e) a monomer having -CH(OH)-CH₂-OH group,
as necessary components, wherein amounts of the monomer (a), the monomer (b), the monomer (c), the monomer (d) and the monomer (e) are 30 to 80 parts, 1 to 30 parts, 0.5 to 20 parts, 0.5 to 20 parts and 0.5 to 20 parts, respectively.

The fluorine-containing copolymer of the present invention functions as an active component of the fluorine-containing fiber processing agent having soil releasability.

### Effects of the Invention

The present invention can impart excellent alcohol repellency, oil repellency, stain-proofing properties and soil releasability to textiles and the like and also can give the processing excellent in washing durability of alcohol repellency, oil repellency, stain-proofing properties and soil releasability. In particular, the above advantageous effects are remarkable in a natural fiber such as cotton fiber or a mixture fiber thereof.

Also, the above-mentioned excellent fluorine-containing textile processing agent is obtained, even if the number of carbon atoms of a perfluoroalkyl group in the fluorine-containing copolymer is less than 8.

In the prior art, the perfluoroalkyl group having less than 8 carbon atoms gives poor alcohol repellency, the oil repellency and soil releasability. According to the present invention, even if a polymerizable monomer containing a perfluoroalkyl group having less than 8 carbon atoms, excellent soil releasability is obtained due to its high flip-flop properties, while maintaining excellent alcohol repellency and oil repellency in air.

### Mode of Carrying Out the Invention

The fluorine-containing copolymer of the present invention is a fluorine-containing copolymer which comprises repeating units derived from
(a) a monomer having a fluoroalkyl group or a fluoroalkenyl group,
(b) a monomer having an alkylene oxide group,
(c) a monomer having an acetoacetyl group,
(d) a monomer having -CH(OH)-CH₂-Cl group, and
(e) a monomer having -CH(OH)-CH₂-OH group
as necessary components.

If necessary, the fluorine-containing copolymer of the present invention may further comprise a repeating unit derived from (f) a monomer which is other than the monomers (a), (b), (c), (d) and (e) and which has unsaturated double bond copolymerizable with any of the monomers (a), (b), (c), (d) and (e).

Generally, each of the monomers (b), (c), (d), (e) and (f) is free from a fluorine atom.

In the monomer (a) having a fluoroalkyl group or a fluoroalkenyl group, the carbon number of the fluoroalkyl group is preferably 1 to 21, for example 1 to 8, particularly 1 to 6, especially 4 to 6 and the carbon number of the fluoroalkenyl group is preferably 3 to 21, for example 3 to 8, particularly 3 to 6, especially 4 to 6.

The monomer (a) is preferably a fluorine-containing monomer represented by the general formula (1):

C(-A¹) (-D¹)=C(-X¹)-Y¹-[Q-Z-]ₚ-T-R_{f} (1)

wherein
A¹, D¹ and X¹ each is a hydrogen atom, a methyl group, an alkyl group having a linear or branched chain having 2 to 20 carbon atoms, a fluorine atom, a chlorine atom, a bromine atom, an iodine atom, a CFL¹L² group (in which L¹ and L² each is a hydrogen atom, a fluorine atom or a chlorine atom), a cyano group, a linear or branched fluoroalkyl group having 4 to 6 carbon atoms, a substituted or unsubstituted benzyl group, or a substituted or unsubstituted phenyl group,
Y¹ is -C(=O)-O-, -C(=O)-NH-, -O- or -O-(CF₂CF(-CF₃)O-)_{g}-(in which g is 1 to 21);
Q is -(CH₂)ₙ- or -(CH₂)ₙ-N(-Q¹)- (in which n is 1 to 10, and Q₁ is a hydrogen atom or C_{q}H_{2q+1} where q is 1 to 30) ;
Z is -S-, -SO-, -SO₂- or -C(-Z¹)(-Z²)- (in which Z¹ and Z² each is a hydrogen atom, -OH or -OCO-C_{w}H_{2w+1} (in which w is 1 to 30));
T is a direct bond, an aliphatic group having 1 to 10 carbon atoms, an aromatic, cycloaliphatic or araliphatic group having 6 to 20 carbon atoms;
R_{f} is a linear or branched fluoroalkyl group having 1 to 21 carbon atoms or a fluoroalkenyl group having 3 to 21 carbon atoms; and
p is 0 or 1.

The monomer (a) may be, for example, an acrylate ester compound, an acryl amide compound or a vinyl ether compound.
A¹ and D¹ each is preferably a hydrogen atom.

Specific examples of T are as follows:

-(CH₂)ₘ-

wherein m is 0 to 10, for example, 1 to 5.

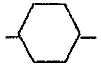

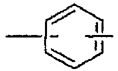

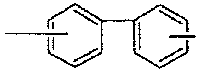

In the general formula (1), the Rf group is preferably a perfluoroalkyl group having 1 to 21, for example 1 to 8, particularly 4 to 6 carbon atoms or a perfluoroalkenyl group having 3 to 21, for example 3 to 8, particularly 3 to 6 carbon atoms.

When the Rf group is a fluoroalkyl group, examples of the Rf group include -CF₃, -CF₂CF₃, -CF₂CF₂CF₃, -CF(CF₃)₂, -CF₂CF₂CF₂CF₃, -CF₂CF(CF₃)₂, -C(CF₃)₃, -(CF₂)4CF₃, -(CF₂)₂CF(CF₃)₂, -CF₂C(CF₃)₃, -CF(CF₃)CF₂CF₂CF₃, -(CF₂)₅CF₃, -(CF₂)₃CF(CF₃)₂, -(CF₂)₂H, -CF₂CFHCF₃, -(CF₂)₄H and -(CF₂)₆H. When the Rf group is a fluoroalkenyl group, examples of the Rf group include -CF=CFCF₃, -CF=C (CF₃)₂, -CF=C(CF₃) (CF₂CF₂CF₃), -CF=C(CF₃) (CF(CF₃)₂), -C(CF₃)=CF(CF(CF₃)₂) and -C(CF₂CF₃)=C(CF₃)₂.

The specific examples of the general formula (1) include, but are not limited to, the followings:

Examples of the acrylate ester compound or the acrylamide compound include:

CH₂=C(-H)-C(=O)-O-(CH₂)₁₀-Rf

CH₂=C(-CH₂)-C(=O)-O-(CH₂)₁₀-Rf

CH₂=C(-H)-C(=O)-O-CH₂-Rf

CH₂=C(-CH₃)-C(=O)-O-CH₂-Rf

CH₂=C(-H)-C(=O)-O-(CH₂)₂-Rf

CH₂₌C(-(CH₃)-C(=O)-O-(CH₂)₂-Rf

CH₂=C(-Cl)-C(=O)-O-(CH₂)₂-Rf

CH₂=C(-F)-C(=O)-O-(CH₂)₂-Rf

CH₂=C(-BR)-C(=O)-O-(CH₂)₂-Rf

CH₂=C(-I)-C(=O)-O-(CH₂)₂-Rf

CH₂=C(-CF₃)-C(=O)-O-(CH₂)₂-Rf

CH₂=C(-CN)-C(=O)-O-(CH₂)₂-Rf

CH₂=C(-Rf)-C(=O)-O-(CH₂)₂-Rf

CH₂=C(-CH₂-C₆H₅)-C(=O)-O-(CH₂)₂-Rf

CH₂=C(-C₆H₅)-C(=O)-O-(CH₂)₂-Rf

CH₂=C(-H)-C(=O)-O-(CH₂)₂-N(-CH₃)-SO₂-Rf

CH₂=C(-F)-C(=O)-O-(CH₂)₂-N(-CH₃)-SO₂-Rf

CH₂=C(-Cl)-C(=O)-O-(CH₂)₂-N(-CH₃)-SO₂-Rf

CH₂=C(-CF₃)-C(=O)-O-(CH₂)₂-N(-CH₃)-SO₂-Rf

CH₂=C(-H)-C(=O)-O-(CH₂)₂-N(-C₂H₅)-SO₂-Rf

CH₂=C(-F)-C(=O)-O-(CH₂)₂-N(-C₂H₅)-SO₂-Rf

CH₂=C(-Cl)-C(=O)-O-(CH₂)₂-N(-C₄H₉)-SO₂-Rf

CH₂=C(-CH₃)-C(=O)-O-CH₂-CH(-OCO-CH₃)-CH₂-Rf

CH₂=C(-F)-C(=O)-O-CH₂-CH(-OCO-CH₃)-CH₂-Rf

CH₂=C(-Cl)-C(=O)-O-CH₂-CH(-OCO-CH₃)-CH₂-Rf

CH₂=C(-H)-C(=O)-O-CH₂-CH(-OH)-CH₂-Rf

CH₂=C(-F)-C(=O)-O-CH₂-CH(-OH)-CH₂-Rf

CH₂=C(-Cl)-C(=O)-O-CH₂-CH(-OH)-CH₂-Rf

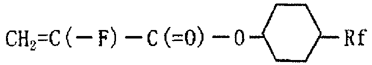

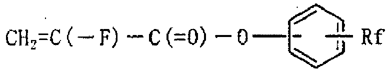

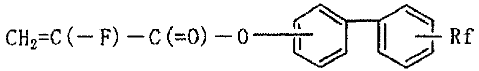

CH₂=C(-H)-C(=O)-O-(CH₂)₂-S-Rf

CH₂-C(-H)-C(=O)-O-(CH₂)₂-S-(CH₂)₂-Rf

CH₂=C(-H)-C(=O)-O-(CH₂)₃-SO₂-Rf

CH₂=C(-H)-C(=O)-O-(CH₂)₂-SO₂-(CH₂)₂-Rf

CH₂=C(-H)-C(=O)-NH-(CH₂)₂-Rf

CH₂=C(-CH₃)-C(=O)-O-(CH₂)₂-S-Rf

CH₂=C(-CH₃)-C(=O)-O-(CH₂)₂-S-(CH₂)₂-Rf

CH₂=C(-CH₃)-C(=O)-O-(CH₂)₃-SO₂-Rf

CH₂=C(-CH₃)-C(=O)-O-(CH₂)₂-SO₂-(CH₂)₂-Rf

CH₂=C(-CH₃)-C(=O)-NH-(CH₂)₂-Rf

CH₂=C(-F)-C(=O)-O-(CH₂)₂-S-Rf

CH₂=C(-F)-C(=O)-O-(CH₂)₂-S-(CH₂)₂-Rf

CH₂=C(-F)-C(=O)-O-(CH₂)₂-SO₂-Rf

CH₂=C(-F)-C(=O)-O-(CH₂)₂-SO₂-(CH₂)₂-Rf

CH₂=C(-F)-C(=O)-NH-(CH₂)₂-Rf

CH₂=C(-Cl)-C(=O)-O-(CH₂)₂-S-Rf

CH₂=C(-Cl)-C(=O)-O-(CH₂)₂-S-(CH₂)₂-Rf

CH₂=C(-Cl)-C(=O)-0-(CH₂)₂-SO₂-Rf

CH₂=C(-Cl)-C(=O)-O-(CH₂)₂-SO₂-(CH₂)₂-Rf

CH₂=C(-Cl)-C(=O)-NH-(CH₂)₂-Rf

CH₂=C(-CF₃)-C(=O)-O-(CH₂)₂-S-Rf

CH₂=C(-CF₃)-C(=O)-O-(CH₂)₂-S-(CH₂)₂-Rf

CH₂=C(-CF₃)-C(=O)-O-(CH₂)₂-SO₂-Rf

CH₂=C(-CF₃)-C(=O)-O-(CH₂)₂-SO₂-(CH₂)₂-Rf

CH₂=C(-CF₃)-C(=O)-NH-(CH₂)₂-Rf

CH₂=C(-CF₂H)-C(=O)-O-(CH₂)₂-S-Rf

CH₂=C(-CF₂H)-C(=O)-O-(CH₂)₂-S-(CH₂)₂-Rf

CH₂=C(-CF₂H)-C(=O)-O-(CH₂)₂-SO₂-Rf

CH₂=C(-CF₂H)-C(=O)-O-(CH₂)₂-SO₂-(CH₂)₂-Rf

CH₂=C(-CF₂H)-C(=O)-NH-(CH₂)₂-Rf

CH₂=C(-CN)-C(=O)-O-(CH₂)₂-S-Rf

CH₂=C(-CN)-C(=O)-O-(CH₂)₂-S-(CH₂)₂-Rf

CH₂=C(-CN)-C(=O)-O-(CH₂)₂-SO₂-Rf

CH₂=C(-CN)-C(=O)-O-(CH₂)₂-SO₂-(CH₂)₂-Rf

CH₂=C(-CN)-C(=O)-NH-(CH₂)₂-Rf

CH₂=C(-CF₂CF₃)-C(=O)-O-(CH₂)₂-S-Rf

CH₂=C(-CF₂CF₃)-C(=O)-O-(CH₂)₂-S-(CH₂)₂-Rf

CH₂=C(-CF₂CF₃)-C(=O)-O-(CH₂)₂-SO₂-Rf

CH₂=C(-CF₂CF₃)-C(=O)-O-(CH₂)₂-SO₂-(CH₂)₂-Rf

CH₂=C(-CF₂CF₃)-C(=O)-NH-(CH₂)₂-Rf

CH₂=C(-F)-C(=O)-O-(CH₂)₃-S-Rf

CH₂=C(-F)-C(=O)-O-(CH₂)₃-S-(CH₂)₂-Rf

CH₂=C(-F)-C(=O)-O-(CH₂)₃-SO₂-Rf

CH₂=C(-F)-C(=O)-O-(CH₂)₃-SO₂-(CH₂)₂-Rf

CH₂=C(-F)-C(=O)-NH-(CH₂)₃-Rf

CH₂=C(-Cl)-C(=O)-O-(CH₂)₃-S-Rf

CH₂=C(-Cl)-C(=O)-O-(CH₂)₃-S-(CH₂)₂-Pf

CH₂=C(-Cl)-C(=O)-O-(CH₂)₃-SO₂-Rf

CH₂=C(-Cl)-C(=O)-O-(CH₂)₃-SO₂-(CH₂)₂-Rf

CH₂=C(-CF₃)-C(=O)-O-(CH₂)₃-S-Rf

CH₂=C(-CF₃)-C(=O)-O-(CH₂)₃-S-(CH₂)₂-Rf

CH₂=C(-CF₃)-C(=O)-O-(CH₂)₃-SO₂-Rf

CH₂=C(-CF₃)-C(=O)-O-(CH₂)₃-SO₂-(CH₂)₂-Rf

CH₂=C(-CF₂H)-C(=O)-O-(CH₂)₃-S-Rf

CH₂=C(-CF₂H)-C(=O)-O-(CH₂)₃-S-(CH₂)₂-Rf

CH₂=C(-CF₂H)-C(=O)-O-(CH₂)₃-SO₂-Rf

CH₂=C(-CF₂H)-C(=O)-O-(CH₂)₃-SO₂-(CH₂)₂-Rf

CH₂=C(-CN)-C(=O)-O-(CH₂)₃-S-Rf

CH₂=C(-CN)-C(=O)-O-(CH₂)₃-S-(CH₂)₂-Rf

CH₂=C(-CN)-C(=O)-O-(CH₂)₃-SO₂-Rf

CH₂=C(-CN)-C(=O)-O-(CH₂)₃-SO₂-(CH₂)₂-Rf

CH₂=C(-CF₂CF₃)-C(=O)-O-(CH₂)₃-S-Rf

CH₂=C(-CF₂CF₃)-C(=O)-O-(CH₂)₃-S-(CH₂)₂-Rf

CH₂=C(-CF₂CF₃)-C(=O)-O-(CH₂)₃-SO₂-Rf

CH₂=C(-CF₂CF₃)-C(=O)-O-(CH₂)₃-SO₂-(CH₂)₂-Rf

wherein Rf is a linear or branched fluoroalkyl group having 1 to 21, for example 1 to 8, particularly 4 to 6 carbon atoms or a fluoroalkenyl group having 3 to 21, for example 3 to 8, particularly 3 to 6 carbon atoms.

Examples of the vinyl ether compound include:

CF₂=C(-F)-O-Rf

CF₂=C(-F)-O-CH₂-Rf

CF₂=C(-F)-O-CH₂-CH₂-Rf

CH₂=C(-H)-O-CH₂CH₂-Rf

CF₂=C(-F)-O-CH₂-CH(-OH)-CH₂-Rf

CH₂=C(-H)-O-CH₂-CH(-OH)-CH₂-Rf

CH₂=C(-H)-O-(CF₂-CF(-CF₃)-O)₂-Rf

CH₂=C(-Cl)-O-(CF₂-CF(-CF₃)-O)₂-Rf wherein Rf is a linear or branched fluoroalkyl group having 1 to 21, for example 1 to 8, particularly 4 to 6 carbon atoms or a fluoroalkenyl group having 3 to 21, for example 3 to 8, particularly 3 to 6 carbon atoms.

The monomer (a) may be a mixture of two or more compounds.

The monomer (b) preferably has a linear or branched alkylene group having 2 to 6 carbon atoms in the alkylene oxide group. The monomer (b) is preferably represented by the general formula (2):

C(-A²) (-D²)=C(-X²)-Y²-[E-O-]ᵣ-G (2)

wherein
A², D² and X² each is a hydrogen atom, a methyl group, an alkyl group having a linear or branched chain having 2 to 20 carbon atoms, a chlorine atom, a bromine atom, an iodine atom, a cyano group, a substituted or unsubstituted benzyl group, or a substituted or unsubstituted phenyl group;
Y² is -C(=O)-O-, -C(=O)-NH- or -O-;
E is a linear or branched alkylene group having 2 to 6 carbon atoms;
r is 1 to 50; and
G is a hydrogen atom, a methyl group, an alkyl group having a linear or branched chain having 2 to 20 carbon atoms, a substituted or unsubstituted benzyl group, or a substituted or unsubstituted phenyl group.
A² and D² each is preferably a hydrogen atom. X² is preferably a hydrogen atom or a methyl group.

Particularly, E is preferably ethylene or propylene.

The specific examples of the general formula (2) include, but are not limited to, the following:

H₂C=CHCOO-CH₂CH₂O-H

H₂C=C(CH₃)COO-CH₂CH₂O-H

H₂C=CHCOO-(CH₂CH₂O)₉-H

H₂C=C(CH₃)COO-(CH₂CH₂O)₉-H

H₂C=C(CH₃)COO-(CH₂CH₂O)₉-CH₃

H₂C=C(CH₃)COO-(CH₂CH₂O)₅-CH₃

H₂C=C(CH₃)COO-(CH₂CH(CH₃)O)₉-H

H₂C=CHCOO-(CH₂CH(CH₃)O)₉-H

H₂C=C(CH₃)COO-(CH₂CH(CH₃)O)₉-CH₃

H₂C=C(CH₃)COO-(CH₂CH(CH₃)O)₁₂-CH₃

H₂C=C(CH₃)COO-(CH₂CH(CH₃)O)₄O-CH₃

H₂C=C(CH₃)COO-(CH₂CH₂O)₅-(CH₂CH(CH₃)O)₃-CH₃

H₂C=C(CH₃)CONH-CH₂CH₂O-H

H₂C=CHCONH-(CH₂CH₂O)₉-H

H₂C=C(CH₃)CONH-(CH₂CH₂O)₅-(CH₂CH(CH₃)O)₃-CH₃

H₂C=CH-O-CH₂CH₂O-H

H₂C=C(CH₃)-O-(CH₂CH₂O)₅-CH₃

H₂C=C(CH₃)-O-(CH₂CH(CH₃)O)₁₂-CH₃

The monomer (b) may be a mixture of two or more compounds.

The monomer (b) may be a mixture of a monomer wherein r=1 [for example, hydroxyethyl (meth)acrylate] with a monomer wherein r is 2 to 50, where a preferable molar ratio of the monomer (wherein r=1) to the monomer (wherein r is 2 to 50) may be in a range from 1:20 to 10:1.

Examples of the monomer (c) include compounds having both an acetoacetyl group (CH₃-CO-CH₂-CO-) and a carbon-carbon double bond. The acetoacetyl group provides excellent adhesion to the substrate to be treated and shows good reactivity with a crosslinking agent (for example, an isocyanate compound) due to the presence of an active methylene group in the molecule, thereby improves washing durability.

The monomer (c) is preferably represented by the general formula (3) :

CH₃-CO-CH₂-CO-O-Q³-B³ (3)

wherein
Q³ is a direct bond or an alkylene group having 1 to 10 carbon atoms; and
B³ is an acrylate group (CH₂=CH-CO-O-), a methacrylate group (CH₂=C(CH₃)-CO-O-), an acrylamide group (CH₂=CH-CO-NH-), a methacrylamide group (CH₂=C(CH₃)-CO-NH-) or an allyl group (CH₂=CH-CH₂-). Q³ is preferably -(CH₂)ₘ- (wherein m is a number in a range from 0 to 10, particularly from 1 to 5).

Specific examples of the monomer (c) include acetoacetoxyethyl acrylate, acetoacetoxyethyl methacrylate, acetoacetoxypropyl acrylate, acetoacetoxypropyl methacrylate, N-(2-acetoacetoxyethyl)acrylamide, N-(2-acetoacetoxyethyl)methacrylamide, vinyl acetoacetate and allyl acetoacetate. Acetoacetoxyethyl (meth)acrylate and acetoacetoxypropyl (meth)acrylate are preferable.

The monomer (c) may be a mixture of two or more compounds.

Examples of the monomer (d) include compounds having a -CH(OH)-CH₂-Cl group and a carbon-carbon double bond.

The monomer (d) is preferably a monoester of an ethylenically unsaturated monocarboxylic acid and 3-monochloropropane-1,2-diol. Examples of the ethylenically unsaturated monocarboxylic acid include (meta)acrylic acid, crotonic acid and cinnamic acid.

Specific examples of the monomer (d) include 3-chloro-2-hydroxypropyl methacrylate and 3-chloro-2-hydroxypropyl acrylate.

The monomer (d) may be a mixture of two or more compounds.

Examples of the monomer (e) include compounds having a -CH(OH)-CH₂-OH group and a carbon-carbon double bond.

The monomer (e) is preferably a monoester of an ethylenically unsaturated monocarboxylic acid and glycerol. Examples of the ethylenically unsaturated monocarboxylic acid include (meta)acrylic acid, crotonic acid and cinnamic acid.

Specific examples of the monomer (e) include glycerol monomethacrylate and glycerol monoacrylate.

The monomer (e) may be a mixture of two or more compounds.

The copolymer of the present invention contains the monomer (a), the monomer (b), the monomer (c), the monomer (d) and the monomer (e) in amounts of 30 to 80 parts by weight, 1 to 30 parts by weight, 0.5 to 20 parts by weight, 0.5 to 20 parts by weight and 0.5 to 20 parts by weight, respectively, and preferably in amounts of 50 to 80 parts by weight, 1 to 20 parts by weight, 1 to 15 parts by weight, 1 to 15 parts by weight and 1 to 15 parts by weight, respectively. Preferably, the total amount of the monomer (a), the monomer (b), the monomer (c), the monomer (d) and the monomer (e) is 100 parts by weight.

For the purpose of an improvement in durable soil releasability, solubility in an organic solvent, flexibility and adhesion to a treated substrate, another monomer (f) may be incorporated into the copolymer of the present invention. Specific examples of the monomer (f) include, for example, but are not limited to, diacetoneacrylamide, (meth)acrylamide, N-methylolacrylamide, N,N-dimethylaminoethyl (meth)acrylate, N,N-diethylaminoethyl (meth)acrylate, butadiene, chloroprene, glycidyl (meth)acrylate, a maleic acid derivative, a vinyl halide such as vinyl chloride, ethylene, a vinylidene halide such as vinylidene chloride, a vinyl alkyl ether, styrene, an alkyl (meth)acrylate, vinylpyrrolidone, an isocyanate group-containing (meth)acrylate such as 2-isocyanatoethyl methacrylate or said (meth)acrylate in which an isocyanate group is blocked with a blocking agent such as methyl ethyl ketoxime. A monomer having an amino group (e.g., N,N-dimethylaminoethyl (meth)acrylate and N,N-diethylaminoethyl (methacrylate) is preferable. The amount of the other monomer (f) may be preferably from 0 to 40 % by weight, more preferably from 0.1 to 20 % by weight, for example, from 1 to 10% by weight, based on the copolymer, and the other monomer (f) may be a mixture of two or more compounds.

The weight-average molecular weight of the copolymer of the present invention may be from 1,000 to 1,000,000, and preferably from 5,000 to 500,000. When the weight-average molecular weight is from 1,000 to 1,000,000, high soil releasability is obtained and a polymer liquid has low viscosity so that the handling of the polymer is easy. The weight-average molecular weight is measured by a gel permeation chromatography in terms of polystyrene.

The copolymer of the present invention may be a random copolymer, a block copolymer or a graft copolymer.

A polymerization method of producing the copolymer of the present invention is not limited. Various polymerization method such as a bulk polymerization, a solution polymerization, an emulsion polymerization and a radiation polymerization can be selected. For example, a solution polymerization using an organic solvent and an emulsion polymerization using water or both of an organic solvent and water are generally selected. A treatment liquid is produced by diluting a reaction mixture with water or adding an emulsifying agent to make the emulsification in water, after the polymerization.

Examples of the organic solvent include ketones such as acetone and methyl ethyl ketone; esters such as ethyl acetate and methyl acetate; glycols such as propylene glycol, dipropylene glycol monomethyl ether, dipropylene glycol, tripropylene glycol and low molecular weight polyethylene glycol; alcohols such as ethyl alcohol and isopropanol; and 1-methyl-2-pyrrolidone.

As the emulsifying agent for the emulsion polymerization and for emulsification in water by adding the emulsifying agent after polymerization, various conventional emulsifying agents such as an anionic emulsifying agent, a cationic emulsifying agent and a nonionic emulsifying agent can be used.

As a polymerization, initiator, for example, peroxide, an azo compound, a persulfuric acid-based compound can be used. The polymerization initiator is generally water-soluble and/or oil-soluble.

Specific examples of the oil-soluble polymerization initiator are preferably 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexane-1-carbonitrile), dimethyl 2,2'-azobis(2-methylpropionate), 2,2'-azobis(2-isobutyronitrile), benzoyl peroxide, di-tertiary-butyl peroxide, lauryl peroxide, cumene hydroperoxide, t-butyl peroxypivalate, diisopropyl peroxydicarbonate, and t-butyl perpivalate.

Specific examples of the water-soluble polymerization initiator are preferably 2,2'-azobisisobutylamidine dihydrochloride, 2,2'-azobis(2-methylpropionamidine) hydrochloride, 2,2'-azobis[2-(2-imidazolin-2-yl)propane] hydrochloride, 2,2'-azobis[2-(2-imidazolin-2-yl)propane]sulfate hydrate, 2,2'-azobis[2-(5-methyl-2-imidazolin-2-yl)propane]hydrochloride, potassium persulfate, barium persulfate, ammonium persulfate, and hydrogen peroxide.

The polymerization initiator is used in an amount within a range from 0.01 to 5 parts by weight based on 100 parts by weight of the monomer. For the purpose of adjusting the molecular weight of the fluorine-containing copolymer, a known mercapto group-containing compound may be used. Specific examples thereof include 2-mercaptoethanol, thiopropionic acid, and alkyl mercaptan. The mercapto group-containing compound may used within a range from 0.01 to 5 parts by weight based on 100 parts by weight of the monomer.

Specifically, a copolymer can be produced in the following manner.

In a solution polymerization, it is possible to employ a method of dissolving a monomer in an organic solvent in the presence of a polymerization initiator, replacing the atmosphere by nitrogen and stirring the solution with heating at a temperature within a range from 50 to 120°C for 1 to 10 hours. The polymerization initiator generally may be an oil-soluble polymerization initiator. Examples of the organic solvent include ketones such as acetone and methyl ethyl ketone; esters such as ethyl acetate and methyl acetate; glycols such as propylene glycol, dipropylene glycol monomethyl ether, dipropylene glycol, tripropylene glycol and low molecular weight polyethylene glycol; alcohols such as ethyl alcohol and isopropanol; and 1-methyl-2-pyrrolidone.

The organic solvent may be used in an amount within a range from 50 to 1,000 parts by weight based on 100 parts by weight of the total of the monomer.

In an emulsion polymerization, there can be used a method of emulsifying monomers in water in the presence of a polymerization initiator and an emulsifying agent, replacing the atmosphere by nitrogen, and polymerizing with stirring, for example, at the temperature within the range from 50°C to 80°C for 1 hour to 10 hours. The polymerization initiator may be the water-soluble polymerization initiator and/or the oil-soluble polymerization initiator.

In order to obtain an aqueous dispersion of a copolymer, which is superior in storage stability, it is desirable that the monomers are emulsified in water by using an emulsifying device capable of applying a strong shearing energy (e.g., a high-pressure homogenizer and an ultrasonic homogenizer) and then polymerized with using the water-soluble polymerization initiator. Various conventional emulsifying agents such as an anionic emulsifying agent, a cationic emulsifying agent and a nonionic emulsifying agent can be used as the emulsifying agent. The amount of the emulsifying agent is within the range from 0.5 to 10 parts by weight based on 100 parts by weight of the monomers. When the monomers are not completely compatibilized, it is preferable that a compatibilizing agent, for example, a water-soluble organic solvent or a low-molecular weight monomer, which is capable of sufficiently compatibilizing them, is added to these monomers. By the addition of the compatibilizing agent, the emulsifiability and polymerizability can be improved.

Examples of the water-soluble organic solvent include acetone, methyl ethyl ketone, ethyl acetate, propylene glycol, dipropylene glycol monomethyl ether, dipropylene glycol, tripropylene glycol and ethanol. The water-soluble organic solvent may be used in an amount within the range from 1 to 80 parts by weight, e.g., from 5 to 50 parts by weight, based on 100 parts by weight of water.

The copolymer thus obtained can be formed into any form such as an emulsion, an organic solvent solution or an aerosol after optionally diluting with or dispersing in water or an organic solvent, and thus a soil release agent can be obtained. The copolymer functions as an active ingredient of the soil release agent. The soil release agent comprises a fluorine-containing copolymer and a medium, particularly, a liquid medium (for example, an organic solvent and/or water). As used herein, the term "aqueous medium" means a medium comprising only water, and a medium containing, in addition to water, an organic solvent (in the aqueous medium, the amount of the organic solvent is 80 parts by weight or less, for example, 0.1 to 50 parts by weight, in particular 5 to 30 parts by weight based on 100 parts by weight of water). In the soil release agent, the concentration of the fluorine-containing copolymer may be, for example, from 0.01 to 50% by weight.

The soil release agent of the present invention preferably comprises the fluorine-containing copolymer and the liquid medium.

The copolymer of the present invention can be applied to a substrate to be treated as a soil release agent by using an optional method, according to the type of the treated substrate and the preparation form (an emulsion, an organic solvent solution, or an aerosol). In the case of an aqueous emulsion or an organic solvent solution, a method of coating on the surface of the treated substrate by using a known method, for example, a coating method such as a dip coating or spray coating method, followed by drying can be employed. In this case, a heat treatment such as curing may be performed, if necessary.

If necessary, another blender can be used in combination. Examples of the blender include water- and oil-repellents, anti-wrinkle agents, anti-shrinkage agents, flame retardants, crosslinking agents, antistatic agents, softening agents, water-soluble polymers such as polyethylene glycol and polyvinyl alcohol, wax emulsions, antibacterial agents, pigments, and coating materials. These blenders may be added to a treating bath upon treatment of the substrate. If possible, the blenders may be preliminarily mixed with the copolymer of the present invention.

The treated article include, in addition to a textile, masonry, a filter (for example, an electrostatic filter), a dust protective mask, glass, paper, wood, leather, fur, asbestos, brick, cement, metal and oxide, ceramics, plastics, a coated surface and a plaster, to which the treated article is not limited. It is particularly useful for the textile. The textile has various examples. Examples of the textile include animal- or vegetable-origin natural fibers such as cotton, hemp, wool and silk; synthetic fibers such as polyamide, polyester, polyvinyl alcohol, polyacrylonitrile, polyvinyl chloride and polypropylene; semi-synthetic fibers such as rayon and acetate; inorganic fibers such as glass fiber, carbon fiber and asbestos fiber; and a mixture of these fibers. The textile may be in any form such as a fiber, a yarn and a fabric.

In the present invention, a substrate is treated with a soil release agent. The "treatment" means that a treatment agent is applied to a substrate by immersion, spraying, coating or the like. The treatment gives the result that a fluorine-containing polymer which is an active component of the treatment agent is penetrated into the internal parts of the substrate and/or adhered to surfaces of the substrate.

### EXAMPLES

The present invention is now described in detail by way of Examples, Comparative Examples and Test Examples. However, the present invention is not limited to these.

In the following Examples, Comparative Examples and Test Examples, parts and percentages are by weight unless otherwise specified.

### (1) Soil Releasability

A soil releasability test was performed in accordance with AATCC Soil Release Management Performance Test Method of the USA. As soils for the test, corn oil, mineral oil is used.

A test cloth having a size of 20 cm x 20 cm was spread out on a horizontally spread absorbent blotting paper, and five drops of the corn oil or mineral oil (about 0.2 cc) as the soil were dropped. A glassine paper was laid thereon and a weight of 2,268 g was placed, followed by standing for 60 seconds. After 60 seconds, the weight and the glassine paper were removed, followed by standing at room temperature for 15 minutes. After the lapse of 15 minutes, the test cloth and a ballast cloth (total weight: 1.8 kg) were washed under the conditions of a bath volume of 64 liters and a bath temperature of 38°C for 12 minutes using 100 g of a detergent (an AATCC standard WOB detergent) and an AATCC standard washing machine (manufactured by Kenmore, USA). The clothes were rinsed and then dried by using an AATCC standard tumbler drying machine (manufactured by Kenmore, USA). The state of the remaining soil on the dried test cloth was compared with that of a standard photographic plate for criterion and expressed by the corresponding criteria class (cf. Table 1). As the standard photographic plate for criterion, a photographic plate of AATCC-TM130-2000 (American Association of Textile Chemists and Colorists Test Method 130-2000) was used.

**Table 1: Criteria class of soil releasability**

| Determined grade | Class Criterion |
|---|---|
| 1.0 | Remarkable soil remained |
| 2.0 | Considerable soil remained |
| 3.0 | Slight soil remained |
| 4.0 | Little soil remained |
| 5.0 | No soil remained |

### (2) Alcohol Repellency

An alcohol repellency test was performed in accordance with AATCC-TM130-2000 using a textile. A test cloth was horizontally spread out and one drop of a test solution shown in Table 2 was dropped. The alcohol repellency was evaluated by a penetration state of the test solution after 10 seconds.

[Table 2]

**Table 2: Criteria class of alcohol repellency**

| Determined grade | Test solution | Surface tension (dyne/cm, 25°C) |
|---|---|---|
| 8 | 40:60/Water:IPA (vol/vol) | 24.0 |
| 7 | 50:50/Water:IPA (vol/vol) | 24.5 |
| 6 | 60:40/Water:TPA (vol/vol) | 25.4 |
| 5 | 70:30/Water:IPA (vol/vol) | 27.5 |
| 4 | 80-20/Water:IPA (vol/vol) | 33.0 |
| 3 | 90:10/Water:IPA (vol/vol) | 42.0 |
| 2 | 95:5/Water:IPA (vol/vol) | 50.0 |
| 1 | 98:2/Water:IPA (vol/vol) | 59.0 |
| 0 | None (fails 98vol% water) | - |

| | | |
|---|---|---|
| IPA: Isopropanol | | |

### (3) Oil Repellency

An oil repellency test was performed in accordance with AATCC-TM118-2000 using a textile. A test cloth was horizontally spread out and one drop of a test solution shown in Table 3 was dropped. The oil repellency was evaluated by a penetration state of the test solution after 30 seconds. In the case of low oil repellency, an oily soil penetrates into an article to be treated in air, thus resulting the difficuity of removing the oily soil. Therefore, the oil repellency is an important evaluation indicator, similar to the soil releasability.

[Table 3]

**Table 3 Criteria class of oil repellency**

| Determined grade | Test solution | Surface tension (dyne/cm, 25°C) |
|---|---|---|
| 8 | n-heptane | 20.0 |
| 7 | n-octane | 21.8 |
| 6 | n-decane | 23.5 |
| 5 | n-dodecane | 25.0 |
| 4 | n-tetradecane | 26.7 |
| 3 | n-hexadecane | 27.3 |
| 2 | Mixed liquid of hexadecane/Nujor (35/65) | 29.6 |
| 1 | Nujor | 31.2 |
| 0 | Inferior to 1 | - |

### Example 1

In a 100 ml four-necked flask, 2-(perfluorohexyl)ethyl acrylate (13a) (14g), polyethylene glycol monoacrylate (EO 10mol) (AE-400) (1.2g), dimethylaminoethyl methacrylate (DMAEM) (0.4g), acetoacetoxyethyl methacrylate (AAEM) (0.6g), 3-chloro-2-hydroxypropyl methacrylate (T-M) (1.2g), glycerol monomethacrylate (GLM) (2.6g) and methyl ethyl ketone (30g) were charged and nitrogen flow was performed for 60 minutes. After the inner temperature was raised to 75-80°C, azobisisobutyronitrile (0.12 g) was added and the reaction was performed for 8 hours, thereby a fluorine-containing copolymer was obtained. Finally, the resulted polymerization liquid was neutralized by addition of acetic acid and diluted with water to give a 20 % liquid of the fluorine-containing copolymer. The types and weight ratios of the charged monomers are shown in Table 4. Explanation of abbreviations in Table 4 is shown in Table 5. The composition of the fluorine-containing copolymer was almost the same as the formulations of the charged monomers.

### Examples 2 to 8 and Comparative Examples 1 to 8

The procedure of Example 1 was repeated except that the types and weight ratios of the charged monomers were changed as shown in Table 4, to finally give a 20 % liquid of each fluorine-containing copolymer. The types and weight ratios of the charged monomers are shown in Table 4. Explanation of abbreviation in Table 4 is shown in Table 5. The composition of the fluorine-containing copolymer was almost the same as the formulations of charged monomers.

### Test Example 1

| | |
|---|---|
| 20% Aqueous dispersion of the fluorine-containing copolymer obtained in Example 1: | 8.0 parts |
| NICCA ASSIST V2 (MDI-based blocked isocyanate, Nicca Chemical Co., Ltd.): | 0.25 parts |
| NICCA SUNMARINA S-750 (aqueous dispersion of polyethylene wax, Nicca Chemical Co., Ltd.): | 1.70 parts |
| BECKAMINE NS-19 (glyoxal resin, DIC Corporation): | 8.0 parts |
| BECKAMINE X-80 (catalyst for glyoxal resin, DIC Corporation): | 2.4 parts |
| Tap water: | 79.65 parts |

In the ratio as shown above, the fluorine-containing copolymer liquid and the chemicals such blocked isocyanate and the others were diluted with water to give a treatment liquid. A cotton twill cloth (100%) was immersed in the thus obtained treatment liquid, and then squeezed with a roll to adjust a wet pickup to 60 mass%. The cloth was dried and heat-treated at 160°C for 3 minutes to complete the treatment with the soil release agent. Soil releasability, alcohol repellency and oil repellency of the cloth were measured. The test results are shown in Table 6.

For the purpose of evaluating washing durability, the treated cloth was washed at a normal condition (a bath temperature of 40°C for 12 minutes (excluding a time for rinse and the like) at one wash) and then tumbler-dried. This procedure was taken as one cycle. Soil releasability, alcohol repellency and oil repellency of the treated cloth were measured also for the treated cloth repeatedly subjected to the above cycle. The results are shown in Table 6.

### Test Examples 2 to 8 and Comparative Test Examples 1 to 8

A treatment liquid was prepared, a cloth was treated and then soil releasability, alcohol repellency and oil repellency were measured in the same procedure as in Test Example 1, except that a 20% aqueous dispersion of the fluorine-containing copolymer was replaced with each of polymer liquids obtained in Examples 2 to 8 and Comparative Examples 1 to 8. The results are shown in Table 6.

[Table 4]

**Table 4**

| | Monomer ingredients | Monomer weight ratio (%) |
|---|---|---|
| Example 1 | 13FA/AE-400/DMAEM/AAEM/T-M/GLM | 70/6/2/3/6/13 |
| Example 2 | 13FA/AE-400/DMAEM/AAEM/T-M/GLM | 70/10/2/3/5/10 |
| Example 3 | 13FA/AE-400/DMAEM/AAEM/T-M/GLM | 70/8/2/1/6/13 |
| Example 4 | 13FA/AE-400/DMAEM/AAEM/T-M/GLM | 70/13/2/7/3/5 |
| Example 5 | 13FA/AE-400/DMAEM/AAEM/T-M/GLM | 70/9/2/10/4/5 |
| Example 6 | 13FA/AE-400/AE-200/DMAEM/AAEM/T-M/GLM | 70/3/3/2/3/6/13 |
| Example 7 | 13FA/AE-400/PE-350/DMAEM/AAEM/T-M/GLM | 70/6/3/2/3/3/13 |
| Example 8 | 13FA/AE-200/DMAEM/AAEM/T-M/GLM | 70/6/2/3/6/13 |
| Com. Ex. 1 | 13FA/AE-400/DMAEM/AAEM | 70/18/2/10 |
| Com. Ex. 2 | 13FA/AE-400/DMAEM/AAEM/T-M | 70/10/2/3/15 |
| Com. Ex. 3 | 13FA/AE-400/DMAEM/T-M/GLM | 70/9/2/6/13 |
| Com. Ex. 4 | 13FA/DMAEM/AAEM/GLM | 70/12/3/15 |
| Com. Ex. 5 | 13FA/DMAEM/AAEM/T-M/GLM | 70/2/3/19/6 |
| Com. Ex. 6 | 13FA/DMAEM/AAEM/T-M/GLM | 70/2/3/6/19 |
| Com. Ex. 7 | 13FA/DMAEM/GLM | 70/2/28 |
| Com. Ex. 8 | 13FA/AE-400/DMAEM/AAEM/GLM | 70/10/2/3/15 |

**[Table 5]**

| Table 5 (Explanation of abbreviations in Table 4) | | | |
|---|---|---|---|
| abbreviation | Trade name | Chemical name | Manufacturer |
| 13FA | | 2-(Perfluorohexyl)ethyl acrylate | |
| AE-400 | BLEMMER AE-400 | Polyethylene glycol monoacrylate (EO 10 mol) | NOF Corporation NOF Corporation |
| DMAEM | | Dimethylaminoethyl methacrylate | |
| AAEM | AAEM | Acetoacetoxyethyl methacrylate | Eastman Chemical Japan Co. Ltd. |
| T-M | TOPOLENE M | 3-Chloro-2-hydroxypropyl methacrylate | Shin-Nakamura Chemical Co., Ltd. |
| GLM | BLEMMER GLM | Glycerol monomethacrylate | NOF Corporation |
| AE-200 | BLEMMER AE-200 | Polyethyleneglycol monoacrylate (EO 4.5 mol) | NOF Corporation |
| PE-350 | BLEMMER PE-350 | Polyethyleneglycol monomethacrylate (EO 8 mol) | NOF Corporation |

[Table 6]

**Table 6**

| | Oil repellency | | | Alcohol repellency | | | Soil releasability | | | | | |
|---|---|---|---|---|---|---|---|---|---|---|---|---|
| | | | | | | | Corn oil | | | Mineral oil | | |
| | Init -ial | HL5 | HL10 | Init -ial | HL5 | HL10 | Init -ial | HL5 | HL10 | Init -ial | HL5 | HL10 |
| Example 1 | 5 | 5 | 2 | 5 | 4 | 2 | 4-5 | 4-5 | 4 | 4 | 4 | 4 |
| Example 2 | 5 | 4 | 2 | 5 | 4 | 1 | 4 | 4 | 4 | 4 | 4 | 3-4 |
| Example 3 | 5 | 3 | 2 | 5 | 4 | 2 | 4-5 | 4-5 | 4 | 4 | 4 | 3-4 |
| Example 4 | 5 | 3 | 1 | 4 | 3 | 1 | 4 | 4 | 4 | 4 | 4 | 3-4 |
| Example 5 | 6 | 3 | 1 | 4 | 3 | 1 | 4-5 | 4-5 | 4 | 4 | 4 | 3-4 |
| Example 6 | 5 | 3 | 2 | 5 | 4 | 2 | 4 | 4 | 4 | 4 | 4 | 3-4 |
| Example 7 | 5 | 2 | 1 | 4 | 3 | 1 | 4-5 | 4-5 | 4 | 4 | 4 | 3-4 |
| Example 8 | 6 | 3 | 2 | 5 | 3 | 1 | 4-5 | 4-5 | 4-5 | 4 | 4 | 3-4 |
| Com. Ex. 1 | 5 | 4 | 1 | 3 | 2 | 0 | 4-5 | 4-5 | 4 | 1 4 | 4 | 3-4 |
| Com. Ex. 2 | 5 | 2 | 0 | 3 | 0 | 0 | 4 | 4 | 4 | 3-4 | 3-4 | 3 |
| Com. Ex. 3 | 5 | 4 | 0 | 5 | 2 | 0 | 4 | 4 | 4 | 3-4 | 3-4 | 3 |
| Com. Ex. 4 | 5 | 3 | 0 | 4 | 0 | 0 | 3-4 | 3-4 | 3-4 | 3 | 3 | 3 |
| Com. Ex. 5 | 6 | 1 | 0 | 5 | 2 | 0 | 3 | 3 | 3 | 3 | 3 | 3 |
| Com. Ex. 6 | 5 | 2 | 0 | 5 | 2 | 0 | 4 | 4 | 3-4 | 3-4 | 3-4 | 3-4 |
| Com. Ex. 7 | 5 | 2 | 0 | 3 | 2 | 0 | 4 | 4 | 4 | 3 | 3 | 3 |
| Com. Ex. 8 | 5 | 3 | 0 | 4 | 1 | 0 | 4-5 | 4-5 | 4 | 4 | 4 | 3-4 |
| Untreated cloth | 0 | 0 | 0 | 0 | 0 | 0 | 1 | 1 | 1 | 1 | 1 | 1 |

| | | | | | | | | | | | | |
|---|---|---|---|---|---|---|---|---|---|---|---|---|
| Note) In the table, a number A-B means an intermediate performance between A and B. Each of HL5 and HL10 is after a washing time of 5 and after a washing time of 10. | | | | | | | | | | | | |

## Claims

1. A copolymer, which is a fluorine-containing copolymer comprising repeating units derived from
(a) 30-80 parts of a monomer of formula (1):
C(A¹) (D¹)=C(X¹)-Y¹-[Q-Z-]ₚ-T-R_{f} (1)
wherein
A¹, D¹ and X¹ each is H, methyl, linear or branched
C₂₋₂₀-alkyl, F, Cl, Br, I, a CFL¹L² group (L¹ and L² each individually is H, F or Cl), cyano, linear or branched C₄₋₆-fluoroalkyl, or optionally substituted benzyl or phenyl,
Y¹ is -C(=O)O-, -C(=O)NH-, -O- or -O-(CF₂CF(-CF₃)O-)_{g}- wherein g is 1-21;
Q is -(CH₂)ₙ-, -(CH₂)ₙ-NH- or -(CH₂)ₙ-N(Q¹)-,
wherein n is 1-10, and Q¹ is H or C₁₋₃₀-alkyl;
Z is -S-, -SO-, -SO₂- or -C(Z¹) (Z²)-, wherein Z¹
and Z² each is H, OH or -OCO-(C₁₋₃₀-alkyl);
T is a bond, a C₁₋₁₀-aliphatic group or a C₆₋₂₀-aromatic, -cycloaliphatic or -araliphatic group;
R_{f} is linear or branched C₁₋₂₁-fluoroalkyl or C₃₋₂₁-fluoroalkenyl; and
p is 0 or 1;
(b) 1-30 parts of a monomer of formula (2):
C(A²)(D²)=C(X²)-Y²-(E-O-]ᵣ-G (2)
wherein
A², D² and X² each is H, methyl, linear or branched
C₂₋₂₀-alkyl, Cl, Br, I, cyano, or optionally substituted benzyl or phenyl,
Y² is -C(=O)-O-, -C(=O)-NH- or -O-;
E is linear or branched C₂₋₆-alkylene;
r is 1-50; and
G is H, methyl, linear or branched C₂₋₂₀-alkyl, or optionally substituted benzyl or phenyl;
(c) 0.5-20 parts of a monomer having an acetoacetyl group and a carbon-carbon double bond;
(d) 0.5-20 parts of a monomer having a -CH(OH)-CH₂-Cl group and a carbon-carbon double bond; and
(e) 0.5-20 parts of a monomer having a -CH(OH)-CH₂-OH group and a carbon-carbon double bond.

2. The copolymer of claim 1, wherein in formula (1) R_{f} is C₄₋₆-fluoroalkyl or C₃₋₆-fluoroalkenyl.

3. The copolymer of claim 1, wherein in formula (1), the fluoroalkyl group is a perfluoroalkyl group and the fluoroalkenyl group is a perfluoroalkenyl group.

4. The copolymer of claim 1, wherein monomer (c) is a compound of formula (3):
CH₃-CO-CH₂-CO-O-Q³-B³ (3)
wherein
Q³ is a bond or C1-10-alkylene; and
B³ is an acrylate (CH₂=CH-CO-O-), methacrylate
(CH₂=C(CH₃)-CO-O-), acrylamide (CH₂=CH-CO-NH-), methacrylamide (CH₂=C(CH₃)-CO-NH-) or allyl (CH₂=CH-CH₂-) group.

5. The copolymer of claim 1, wherein monomer (c) is selected from acetoacetoxyethyl acrylate, acetoacetoxyethyl methacrylate, acetoacetoxypropyl acrylate, acetoacetoxypropyl methacrylate, N-(2-acetoacetoxyethyl)acrylamide, N-(2-acetoacetoxyethyl)-methacrylamide, vinyl acetoacetate and allyl acetoacetate.

6. The copolymer of claim 1, wherein monomer (d) is a monoester of an ethylenically unsaturated monocarboxylic acid and 3-monochloropropane-1,2-diol; and preferably 3-chloro-2-hydroxypropyl methacrylate or 3-chloro-2-hydroxypropyl acrylate.

7. The copolymer of claim 1, wherein monomer (e) is a monoester of an ethylenically unsaturated monocarboxylic acid and glycerol; and preferably glycerol monomethacrylate or glycerol monoacrylate.

8. A textile processing agent comprising the copolymer of claim 1, as an active ingredient.

9. The textile processing agent of claim 8, which further comprises a liquid medium.

10. A method of treating a textile substrate with the textile processing agent of claim 9.

11. The method of claim 10, wherein the textile processing agent is applied to the textile substrate such that the amount of fluorine-containing copolymer coated on the textile substrate is 0.05-10 wt.-%, based on the textile substrate, and dried.

12. A textile substrate obtained by the method of claim 10 or 11.

## Patentansprüche

1. Copolymer, das ein Fluor-enthaltendes Copolymer ist, umfassend Wiederholeinheiten abgeleitet von
(a) 30-80 Teilen eines Monomers der Formel (1):
C(A¹)(D¹)=C(X¹)-Y¹-[Q-Z-]ₚ-T-R_{f} (1)
worin
A¹, D¹ und X¹ jeweils H, Methyl, lineares oder verzweigtes C₂₋₂₀-Alkyl, F, Cl, Br, I, eine CFL¹L²-Gruppe (L¹ und L² sind jeweils unabhängig voneinander H, F oder Cl), Cyano, lineares oder verzweigtes C₄₋₆-Fluoralkyl oder gegebenenfalls substituiertes Benzyl oder Phenyl ist;
Y¹ -C(=O)O-, -C(=O)NH-, -O- oder -O-(CF₂CF(-CF₃)O-)_{g} ist, worin g 1-21 ist;
Q-(-CH₂)ₙ, -(CH₂)ₙ-NH- oder -(CH₂)ₙ-N(Q¹)- ist, worin n 1-10 und Q¹ H oder C₁₋₃₀-Alkyl ist;
Z -S-, -SO-, -SO₂ oder -C(Z¹)(Z²)- ist, worin Z¹ und Z² jeweils H, OH oder -OCO-(C₁₋₃₀-Alkyl) ist;
T eine Bindung, eine C₁₋₁₀-aliphatische Gruppe oder
eine C₆₋₂₀-aromatische, -cycloaromatische oder -araliphatische Gruppe ist;
R_{f} ein lineares oder verzweigtes C₁₋₂₁-Fluoralkyl oder C₃₋₂₁-Fluoralkenyl ist; und
P 0 oder 1 ist;
(b) 1 bis 30 Teilen eines Monomers der Formel (2):
C(A²)(D²)=C(X²)-Y²-[E-O-]ᵣ-G (2)
worin
A², D² und X² jeweils H, Methyl, lineares oder verzweigtes C₂₋₂₀-Alkyl, Cl, Br, I, Cyano oder gegebenenfalls substituiertes Benzyl oder Phenyl ist,
Y² -C(=O)-O-, -C(=O)-NH- oder -O- ist;
E lineares oder verzweigtes C₂₋₆-Alkylen ist;
r 1 bis 50 ist; und
G H, Methyl, lineares oder verzweigtes C₂₋₂₀-Alkyl oder gegebenenfalls substituiertes Benzyl oder
Phenyl ist;
(c) 0,5 bis 20 Teilen eines Monomers umfassend eine Acetoacetylgruppe und eine Kohlenstoff-Kohlenstoff-Doppelbindung;
(d) 0,5 bis 20 Teilen eines Monomers umfassend eine -CH(OH)-CH₂-Cl-Gruppe und eine Kohlenstoff-Kohlenstoff-Doppelbindung; und
(e) 0,5 bis 20 Teilen eines Monomers umfassend eine - CH(OH)-CH₂-OH-Gruppe und eine Kohlenstoff-Kohlenstoff-Doppelbindung.

2. Copolymer gemäß Anspruch 1, worin R_{f} in Formel (1) C₄₋₆-Fluoralkyl oder C₃₋₆-Fluoralkenyl ist.

3. Copolymer gemäß Anspruch 1, worin in Formel (1) die Fluoralkylgruppe eine Perfluoralkylgruppe ist und die Fluoralkenylgruppe eine Perfluoralkenylgruppe ist.

4. Copolymer gemäß Anspruch 1, worin Monomer (c) eine Verbindung der Formel (3) ist:
CH₃-CO-CH₂-CO-O-Q³-B³ (3)
worin
Q³ eine Bindung oder C₁₋₁₀-Alkylen ist; und
B³ eine Acrylat- (CH₂=CH-CO-O-), Methacrylat-(CH₂=C(CH₃)-CO-O-), Methacrylamid- (CH₂=C(CH₃)-CO-NH-) oder Allyl-Gruppe (CH₂=CH-CH₂-) ist.

5. Copolymer gemäß Anspruch 1, worin Monomer (c) ausgewählt ist aus Acetoacetoxyethylacrylat, Acetoacetoxyethylmethacrylat, Acetoacetoxypropylacrylat, Acetoacetoxypropylmethacrylat, N-(2-Acetoacetoxyethyl)acrylamid, N-(2-Acetoacetoxyethyl)methacrylamid, Vinylacetoacetate und Allylacetoacetate.

6. Copolymer gemäß Anspruch 1, worin Monomer (d) ein Monoester einer ethylenisch ungesättigten Monocarbonsäure und 3-Monochlorpropan-1,2-diol, und vorzugsweise 3-Chlor-2-hydroxypropylmethacrylat oder 3-Chlor-2-hydroxypropylacrylat ist.

7. Copolymer gemäß Anspruch 1, worin Monomer (e) ein Monoester einer ethylenisch ungesättigten Monocarbonsäure und Glycerol, und vorzugsweise Glycerolmonomethacrylat oder Glycerolmonoacrylat, ist.

8. Textilverarbeitungsmittel umfassend das Copolymer gemäß Anspruch 1 als aktiven Inhaltsstoff.

9. Textilbehandlungsmittel gemäß Anspruch 8, ferner umfassend ein flüssiges Medium.

10. Verfahren zur Behandlung eines textilen Substrats mit dem Textilbehandlungsmittel gemäß Anspruch 9.

11. Verfahren gemäß Anspruch 10, worin das
Textilbehandlungsmittel auf das textile Substrat aufgebracht wird, sodass die Menge des Fluorenthaltenden Copolymers, das auf das textile Substrat aufgebracht ist, 0,05 bis 10 Gew.-%, bezogen auf das textile Substrat, beträgt, und getrocknet wird.

12. Textiles Substrat erhalten durch das Verfahren gemäß Anspruch 10 oder 11.

## Revendications

1. Copolymère qui est un copolymère contenant du fluor comprenant des unités répétées dérivées de
(a) 30 - 80 parties d'un monomère de formule (1) :
C(A¹)(D¹)=C(X¹)-Y¹-[Q-Z-]ₚ-T-R_{f} (1)
où
A¹, D¹ et X¹ sont chacun H, méthyle, C₂₋₂₀-alkyle linéaire ou ramifié, F, Cl, Br, I, un groupe CFL¹L² (L¹ et L² sont chacun individuellement H, F ou Cl), cyano, C₄₋₆-fluoroalkyle linéaire ou ramifié, ou benzyle ou phényle éventuellement substitué,
Y¹ est -C(=O)O-, -C(=O)NH-, -O- ou -O-(CF₂CF(-CF₃)O-)_{g}- où g est 1-21 ;
Q est -(CH₂)n-, -(CH₂)ₙ-NH- ou -(CH₂)ₙ-N(Q¹)-, où n est 1-10, et Q¹ est H ou C₁₋₃₀-alkyle ;
Z est -S-, -SO-, -SO₂- ou -C(Z¹)(Z²)-, où Z¹ et Z² sont chacun H, OH ou -OCO-(C₁₋₃₀-alkyle) ;
T est une liaison, un groupe C₁₋₁₀-aliphatique ou un groupe C₆₋₂₀-aromatique, -cycloaliphatique ou -araliphatique ;
R_{f} est C₁₋₂₁-fluoroalkyle ou C₃₋₂₁-fluoroalcényle linéaire ou ramifié ;
et
p est 0 ou 1;
(b) 1-30 parties d'un monomère de formule (2) :
C(A²)(D²)=C (X²)-Y²-[E-O-]ᵣ-G (2)
où
A², D² et X² sont chacun H, méthyle, C₂₋₂₀-alkyle linéaire ou ramifié, CI, Br, I, cyano, ou benzyle ou phényle éventuellement substitué,
Y² est -C(=O)-O-, -C(=O)-NH- ou -O- ;
E est C₂₋₆-alkylène linéaire ou ramifié ;
r est 1-50 ; et
G est H, méthyle, C₂₋₂₀-alkyle linéaire ou ramifié, ou benzyle ou phényle éventuellement substitué ;
(c) 0,5-20 parties d'un monomère ayant un groupe acétoacétyle et une double liaison carbone-carbone ;
(d) 0,5-20 parties d'un monomère ayant un groupe -CH(OH)-CH₂-Cl et une double liaison carbone-carbone ; et
(e) 0,5-20 parties d'un monomère ayant un groupe -CH(OH)-CH₂-OH et une double liaison carbone-carbone.

2. Copolymère selon la revendication 1, où, dans la formule (1), R_{f} est C₄₋₆-fluoroalkyle ou C₃₋₆-fluoroalcényle.

3. Copolymère selon la revendication 1, où, dans la formule (1), le groupe fluoroalkyle est un groupe perfluoroalkyl et le groupe fluoroalcényle est un groupe perfluoroalcényle.

4. Copolymère selon la revendication 1, où le monomère (c) est un composé de formule (3) :
CH₃-CO-CH₂-CO-O-Q³-B³ (3)
où
Q³ est une liaison ou C₁₋₁₀-alkylène ; et
B³ est un groupe acrylate (CH₂=CH-CO-O-), méthacrylate (CH₂=C(CH₃)-CO-O-), acrylamide (CH₂=CH-CO-NH-), méthacrylamide (CH₂=C(CH₃)-CO-NH-) ou allyle (CH₂=CH-CH₂-).

5. Copolymère selon la revendication 1, où le monomère (c) est choisi parmi l'acrylate d'acétoacétoxyéthyle, le méthacrylate d'acétoacétoxyéthyle, l'acrylate d'acétoacétoxypropyle, le méthacrylate d'acétoacétoxypropyle, le N-(2-acétoacétoxyéthyl)acrylamide, le N-(2-acétoacétoxyéthyl)-méthacrylamide, l'acétoacétate de vinyle et l'acétoacétate d'allyle.

6. Copolymère selon la revendication 1, où le monomère (d) est un monoester d'un acide monocarboxylique éthyléniquement insaturé et du 3-monochloropropane-1,2-diol ; et de préférence le méthacrylate de 3-chloro-2-hydroxypropyle ou l'acrylate de 3-chloro-2-hydroxypropyle.

7. Copolymère selon la revendication 1, où le monomère (e) est un monoester d'un acide monocarboxylique éthyléniquement insaturé et du glycérol ; et de préférence le monométhacrylate de glycérol ou le monoacrylate de glycérol.

8. Agent de traitement des textiles comprenant le copolymère selon la revendication 1 comme ingrédient actif.

9. Agent de traitement des textiles selon la revendication 8 qui comprend en outre un milieu liquide.

10. Procédé de traitement d'un substrat textile avec l'agent de traitement des textiles selon la revendication 9.

11. Procédé selon la revendication 10, où l'agent de traitement des textiles est appliqué au substrat textile de telle sorte que la quantité de copolymère contenant du fluor appliqué en revêtement sur le substrat textile est 0,05 - 10 % en poids, sur la base du substrat textile, et séché.

12. Substrat textile obtenu par le procédé selon la revendication 10 ou 11.
